# EUROPEAN PATENT SPECIFICATION

(11) **EP 1 193 965 B1**
(45) Date of publication and mention of the grant of the patent: **18.03.2009**
(21) Application number: 01308308.4
(22) Date of filing: 28.09.2001
(51) Int. Cl.: H04N 1/00, G06F 17/30

(54) **Apparatus and method for picture transmission and display**
Vorrichtung und Verfahren zur Bildübertragung und Darstellung
Appareil et procédé pour la transmission d'images et affichage

(30) Priority: 29.09.2000 JP 2000301519
(43) Date of publication of application: 03.04.2002
(73) Proprietor: KABUSHIKI KAISHA TOSHIBA, Tokyo 105-8001 (JP)
(72) Inventor: Takahashi, Toshiya, c/o Inter. Prop. Division, Tokyo (JP); Takeda, Naomi, Interllectual Property Division, Tokyo (JP); Imai, Toru, Interllectual Property Division, Tokyo (JP); Hori, Osamu, Interllectual Property Division, Tokyo (JP)
(74) Representative: Granleese, Rhian Jane

(56) References cited:
- EP-A- 0 782 085
- EP-A- 0 917 371
- EP-A- 0 999 504
- EP-A- 1 006 464
- EP-A- 1 024 444

## Description

The present invention relates to an apparatus and a method for transmitting a plurality of still pictures, and more particularly for transmitting and displaying still pictures in a predetermined sequence corresponding to special event, such as a scene change, for example.

Digitalization of pictures is rapidly proceeding as evidenced by the increasing number of sold digital video recorders (DVR), which store pictures taken by an individual in a digital form. Further, digital broadcasting of information (e.g., TV channels) using Communication Satellites (CS) and Broadcasting Satellites (BS) is becoming more and more popular.

In addition, the Internet is currently used to distribute digital pictures. For example, it is now possible to download a short movie, etc. in real-time using a streaming technology existing on the World Wide Web (WWW). With the increased use of digitalized pictures, it has become important for a user to be able to select a particular desired portion of the digitalized picture stream without having to view the entire stream.

A search method, in which typical thumbnail pictures of sections are displayed allowing the user to select a desired thumbnail picture, is disclosed in the publication "Report by a study meeting of Information Processing Society of Japan, HI92-7, pp. 37-42, "GUI for picture media using a picture analysis technology." Thus, the user can search for a desired thumbnail picture without viewing the entire stream of pictures.

Further, the digital picture stream transmitted by broadcasting via the or Internet is frequently compressed in a MPEG (Moving Picture Experts Group) technology so as to reduce the data size. Note, a thumbnail picture is obtained by compressing a still picture.

However, compressed MPEG data is difficult to deal with in certain features such as quick feeding and rewinding processes, for example. Therefore, it is difficult to produce the user's selected thumbnail by quick feeding or rewinding processes.

EP 0 782 085 relates to a system and method for supporting video browsing and a network where a sequence of still images may be provided to a user through a user interface.

Accordingly, one object of the present invention is to solve the above-noted and other problems.

Another object of the present invention is to provide a novel method and apparatus for transmitting thumbnail pictures extracted from a picture stream to an external apparatus in which the thumbnail pictures are transmitted in a predetermined sequence independent of the frame sequence number.

To accomplish these and other objects, in a first aspect, the present invention provides an apparatus for transmitting a plurality of still pictures extracted from a picture stream, comprising:
transmission request receiving means for receiving a transmission request for the plurality of still pictures;
transmission sequence determining means for determining a transmission sequence for the plurality of still pictures which is different than the sequence of the still pictures in the picture stream;
transmission means for transmitting the still pictures according to the transmission sequence determined by the determining means; and
still picture control means coupled to the receiving means, the determining means, and the transmission means, and for controlling an operation of the apparatus, wherein the plurality of still pictures comprise scene-changing still pictures and non-scene-changing still pictures, and
wherein the determining means determines the transmission sequence such that the scene-changing still pictures are transmitted prior to the non-scene-changing still pictures.

In a second aspect, the present invention provides a method for transmitting a plurality of still pictures extracted from a picture stream, comprising:
receiving a transmission request for the plurality of still pictures;
determining a transmission sequence for the plurality of still pictures which is different than the sequence of the still pictures in the picture stream; and
transmitting the still pictures according to the transmission sequence determined in the determining step wherein the plurality of still pictures comprise scene-changing still pictures and non-scene-changing still pictures, and
wherein the determining step determines the transmission sequence be such that the scene-changing still pictures are transmitted prior to the non-scene-changing still pictures.

In a third aspect, the present invention provides a computer program product for transmitting a plurality of still pictures extracted from a picture stream, comprising:
a first computer code configured to receive a transmission request for the plurality of still pictures;
a second computer code configured to determine a transmission sequence for the plurality of still pictures which is different than the sequence of the still pictures in the picture stream; and
a third computer code configured to transmit the still pictures according to the transmission sequence determined by the second computer code, wherein the plurality of still pictures comprise scene-changing still pictures and non-scene-changing still pictures, and
wherein the second computer code determines the transmission sequence be such that the scene-changing still pictures are transmitted prior to the non-scene-changing still pictures.

The present invention can be implemented either in hardware or on software in a general purpose computer. Further the present invention can be implemented in a combination of hardware and software. The present invention can also be implemented by a single processing apparatus or a distributed network of processing apparatuses.

Since the present invention can be implemented by software, the present invention encompasses computer code provided to a general purpose computer on any suitable carrier medium. The carrier medium can comprise any storage medium such as a floppy disk, a CD ROM, a magnetic device or a programmable memory device, or any transient medium such as any signal e.g. an electrical, optical or microwave signal.

A more complete appreciation of the present invention and many of the attendant advantages thereof is readily obtained as the same becomes better understood by reference to the following detailed description when considered in connection with the accompanying drawings, wherein:
Fig. 1 is a block diagram showing a structure of a thumbnail picture transmission apparatus according to a first embodiment of the present invention;
Fig. 2 is a flowchart for explaining an operation of the thumbnail picture transmission apparatus according to the first embodiment of the present invention;
Fig. 3 is a diagram for explaining a picture stream used in the thumbnail picture transmission apparatus according to the first embodiment of the present invention;
Fig. 4 is a diagram showing thumbnail pictures extracted from the picture stream of Fig. 3;
Fig. 5 is a diagram for explaining a transmission sequence of the thumbnail pictures according to the first embodiment;
Fig. 6 is a diagram showing an example of a table produced and transmitted in the first embodiment;
Fig. 7 is a block diagram showing a structure of a thumbnail picture transmission apparatus according to a second embodiment of the present invention;
Fig. 8 is a flowchart for explaining an operation of the thumbnail picture transmission apparatus according to the second embodiment of the present invention;
Fig. 9 is a block diagram showing a structure of a thumbnail picture transmission apparatus according to a third embodiment of the present invention;
Fig. 10 is a flowchart for explaining an operation of the thumbnail picture transmission apparatus according to the third embodiment of the present invention;
Fig. 11 is a flowchart for explaining another operation of the thumbnail picture transmission apparatus according to the third embodiment of the present invention;
Fig. 12 is a block diagram showing a structure of a thumbnail picture display apparatus according to a fourth embodiment of the present invention;
Fig. 13 is a flowchart for explaining an operation of the thumbnail picture display apparatus according to the fourth embodiment of the present invention;
Fig. 14 is a diagram showing an example of thumbnail pictures displayed in the thumbnail picture display apparatus according to the fourth embodiment;
Fig. 15 is a diagram for explaining a display method of the thumbnail pictures according to the fourth embodiment;
Fig. 16 is a flowchart for explaining another operation of the thumbnail picture according to the fourth embodiment of the present invention; and
Fig. 17 is a diagram for explaining another display method of the thumbnail pictures in the thumbnail pictures display apparatus according to the fourth embodiment.

Referring now to the drawings, wherein like reference numerals designate identical or corresponding parts throughout the several views, the present invention will be described.

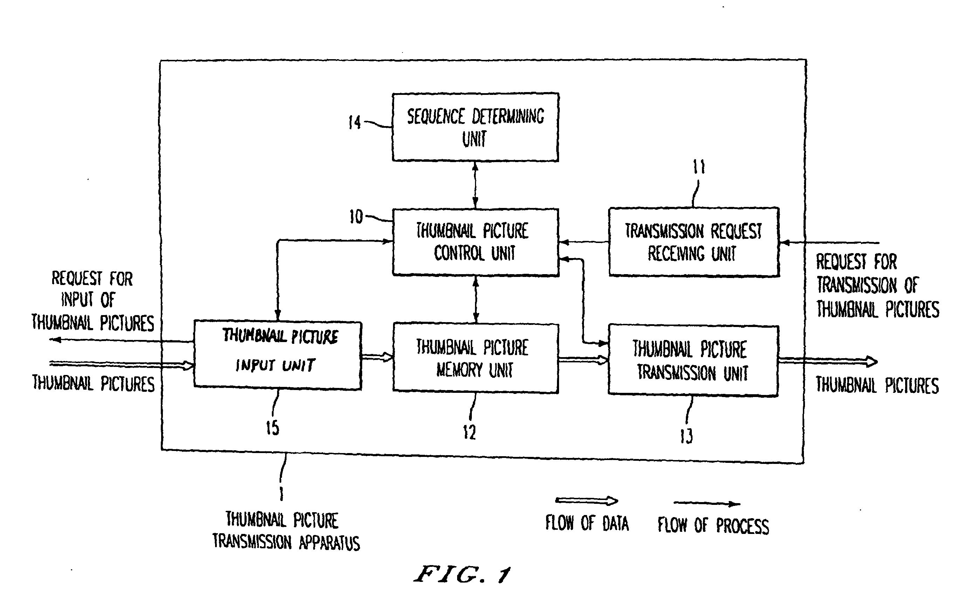

Turning first to Fig. 1, which is a block diagram showing a structure of a thumbnail picture transmission apparatus according to a first embodiment of the present invention. The thumbnail picture transmission apparatus 1 is an apparatus for transmitting a plurality of thumbnail pictures extracted from a picture stream to a terminal via the Internet or by broadcasting the thumbnail pictures.

As shown, the apparatus 1 includes a thumbnail picture control unit 10 for controlling an overall operation of the apparatus 1. For example, the control unit 10 is notified about a request for transmission of thumbnail pictures from a transmission request receiving unit 11, commands a thumbnail picture input unit 15 to retrieve the corresponding thumbnail pictures, requests a transmission sequence for the thumbnail pictures from a sequence determining unit 14, and instructs a thumbnail picture transmission unit 13 to transmit the thumbnail pictures.

Further, the receiving unit 11 is configured to receive a request for transmission of thumbnail pictures from any terminal connected to the apparatus 1. After receiving such a transmission request, the receiving unit 11 notifies the control unit 10 about the transmission request.

In addition, thumbnail pictures input to the thumbnail picture input unit 15 are stored in a thumbnail picture memory unit 12, which includes a memory device such as DRAM (Dynamic Random Access Memory), for example. Further, the sequence-determining unit 14 is responsible for determining a transmission sequence of the thumbnail pictures, and the thumbnail picture transmission unit 13 is responsible for transmitting the thumbnail pictures stored in the memory unit 12 to a respective terminal requesting the pictures, according to the transmission sequence.

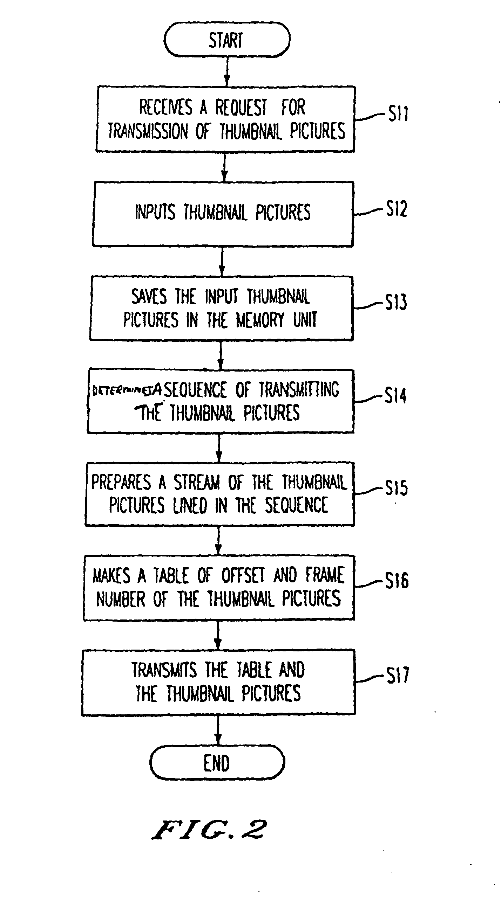

Turning next to Fig. 2, which is a flow chart illustrating an operation of the thumbnail picture transmission apparatus 1.

First, as shown in step S11, the receiving unit 11 receives a request for thumbnail pictures. The receiving unit 11 then notifies the control unit 10 about the transmission request (e.g., by sending a notice of receiving the request), and the thumbnail picture control unit 10 commands the input unit 15 to retrieve the requested thumbnail pictures.

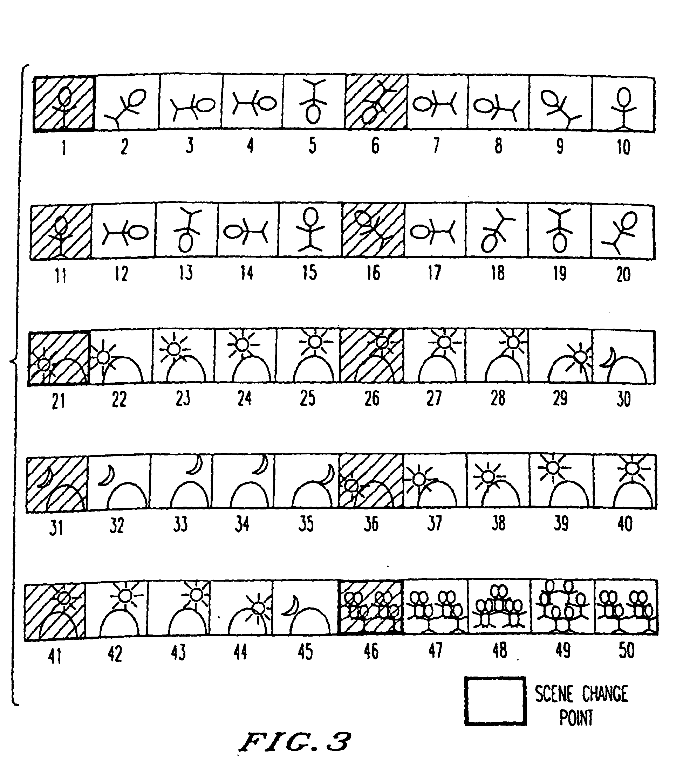

Accordingly, as shown in step S12, the input unit 15 retrieves the thumbnail pictures previously extracted from a picture stream (such as the picture stream shown in Fig. 3). Note, the thumbnail pictures may be retrieved via a network connection or may be retrieved from a memory (not shown), such as HDD (Hard Disk Drive) included in the apparatus 1. After the input thumbnail pictures are retrieved, they are stored temporarily in the thumbnail picture memory unit 12 (step S13).

Fig. 3 shows an example of a picture stream from which thumbnail pictures may be extracted. Note that each of reference numerals described under the picture stream corresponds to a frame number of each thumbnail picture. Further, the thumbnail pictures in Fig. 3 are arranged in a time series, and a sequence of the frame numbers corresponds to the time series.

In addition, the picture stream is compressed according to the MPEG standard, and the thumbnail pictures in frame Nos. 1, 6, 11, 16, 21, 26, 31, 36, 41, and 46 shown by oblique lines represent I-Pictures (Intra-coding Pictures) of the MPEG standard. Further, the frame Nos. 1, 21 and 46 surrounded by black bold lines represent scene change points detected by a cut detection method (which is described in the Technology report by Electronic Information Communication Society of Japan, PRMU96-10, pp. 55-62, High-speed cut detection of moving vector code amount from MPEG animation pictures, the entire contents of which are incorporated by reference).

A first scene in Fig. 3 includes a picture stream from frame No. 1 to frame No. 20, a second scene includes a picture stream from frame No. 21 to frame No. 45, and a third scene includes a picture stream from frame No. 45 to frame No. 50.

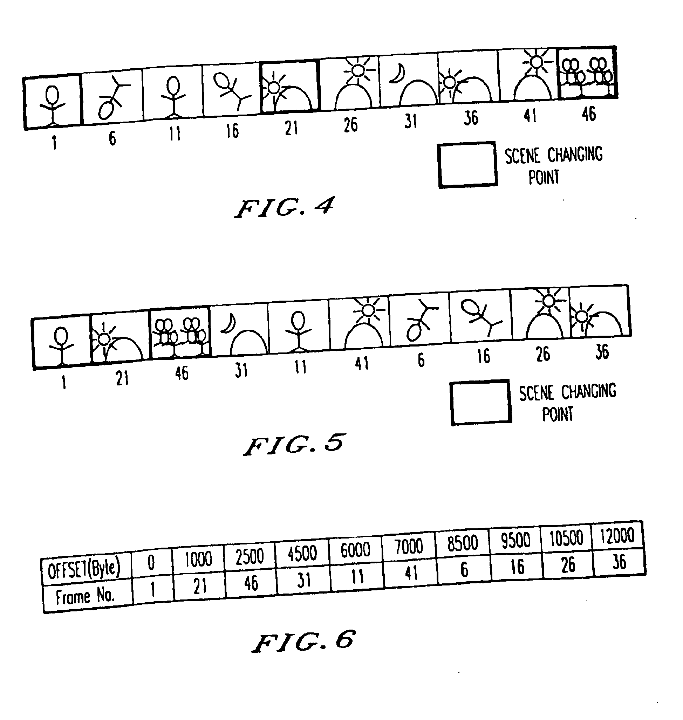

Further, Fig. 4 is a diagram showing the thumbnail pictures of the frame Nos. 1, 6, 11, 16, 21, 26, 31, 36, 41, and 46 in series, and which have been extracted from the picture stream in Fig. 3. Note, the thumbnail pictures shown in Fig. 4 are input to the thumbnail picture input unit 15.

Then, as shown in step S14 of Fig. 2, the thumbnail picture control unit 10 instructs the sequence-determining unit 14 to determine a transmission sequence for the thumbnail pictures. The sequence-determining unit 14 then determines a transmission sequence based on the following method.

First, the thumbnail pictures of the scene change points (frame Nos. 1, 21, 46) shown by black bold frames in Fig. 4 to be are transmitted prior to other thumbnail pictures. Further, a thumbnail picture positioned in the center of the picture stream with a longest interval between the thumbnail pictures 1, 21 and 46 is to be transmitted next. For example, an interval between frame Nos. 21 and 46 is longer than an interval between frame Nos. 1 and 21. Therefore, the thumbnail picture of frame No. 31 (or 36), which is positioned in the center of the interval between the frame Nos. 21 and 46, is to be transmitted. The second longest interval is an interval between the frame Nos. 1 and 21 is the longest. Therefore, the thumbnail picture of frame number 11 positioned in the center of an interval between the frame Nos. 1 and 21 is then to be transmitted. Hereinafter, the thumbnail pictures are similarly to be transmitted. For example, Fig. 5 is a diagram showing the thumbnail pictures rearranged in a transmission sequence based on the above determination by the sequence determining unit 14

In addition, as shown in step S15 of Fig. 2, the control unit 10 then rearranges the thumbnail pictures into the sequence determined by the sequence determining unit 14, and stores the pictures in a region of the thumbnail picture memory unit 12 as a transmission stream.

The control unit 10 also creates a table of an offset (Byte) showing a leading position of each still picture of the transmission stream and its corresponding frame number (step S16). For example, Fig. 6 shows such a table corresponding to the transmission stream. In more detail, the 0 to 999 offset Byte of the picture stream corresponds to the thumbnail picture of frame No. 1, the 1000 to 2499 offset Byte corresponds the thumbnail picture of frame No. 21, and so on.

Then, the thumbnail picture control unit 10 first transfers the table and then transfers the transmission stream stored in the memory unit 12 to the thumbnail picture transmission unit 13. Next, the transmission unit 13 transmits the table and the transmission stream to the respective terminal requesting the thumbnail picture transmission (step S 17).

As described above, the thumbnail pictures are transmitted in a predetermined sequence, which is independent of the frame sequence number. That is, picture frames corresponding to scene change points or other important points are transmitted prior to other frames. Further, the table may include a data list of the frame numbers of the transmission stream.

In addition, for a frame-fed display, many thumbnail pictures are necessary. Therefore, a long time is required to receive all of the thumbnail pictures via the Internet. Thus, according to the conventional method, it takes a long time to display all of the thumbnail pictures. Further, it even takes a longer time to download and display the thumbnail pictures according to the conventional method when a low bandwidth telephone line or the like is used.

Also, received thumbnail pictures are sequentially displayed as soon as they are received. Therefore, because the thumbnail pictures are transmitted according to the frame number sequence of the picture stream in the conventional method, the thumbnail picture of the leading frame is immediately displayed. However, it takes a long time to display the thumbnail pictures in a latter frame. Accordingly, only the thumbnail pictures near the leading frames are immediately displayed.

The first embodiment of the present invention is advantageous in that it solves these types of problems with the conventional method. That is, important thumbnail pictures (such as scene changes, etc.) are displayed first.

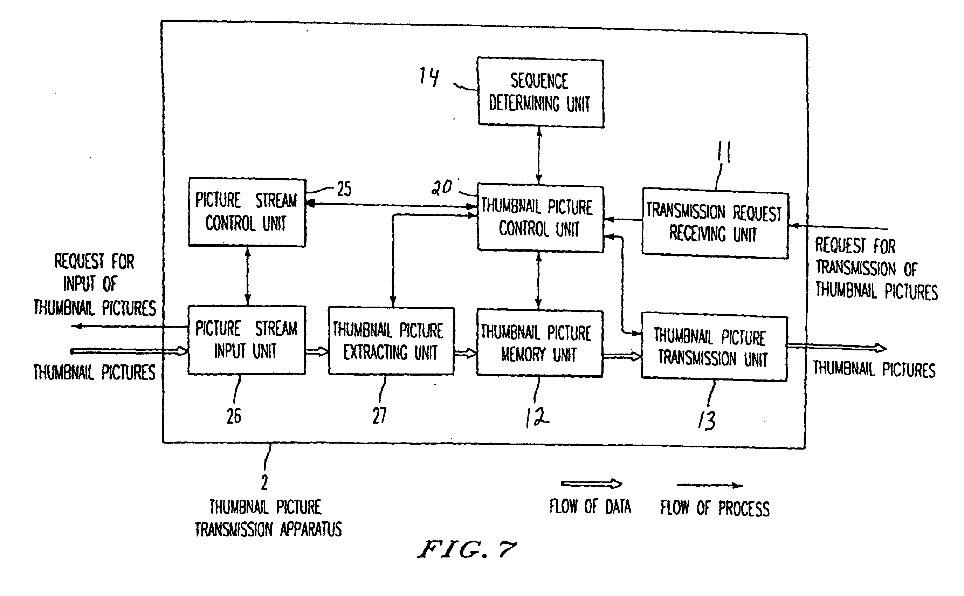

Turning now to Fig. 7, which is a block diagram showing a thumbnail picture transmission apparatus 2 according to a second embodiment of the present invention.

Note, the transmission apparatus 2 includes the same transmission request receiving unit 11, thumbnail picture memory unit 12, thumbnail picture transmission unit 13 and sequence determining unit 14 illustrated in the transmission apparatus 1 shown in Fig. 1. Accordingly, a detailed description will be omitted.

The thumbnail picture transmission apparatus 2 also includes a picture stream control unit 25, which requests an extraction of an input picture stream including thumbnail pictures. The stream control unit 25 also commands a picture stream input unit 26 to send the input picture stream to a thumbnail picture extracting unit 27.

The thumbnail picture extracting unit 27 is configured to extract thumbnail pictures from the picture stream sent from the picture stream input unit 26, and to send the extracted thumbnail pictures to the memory unit 12.

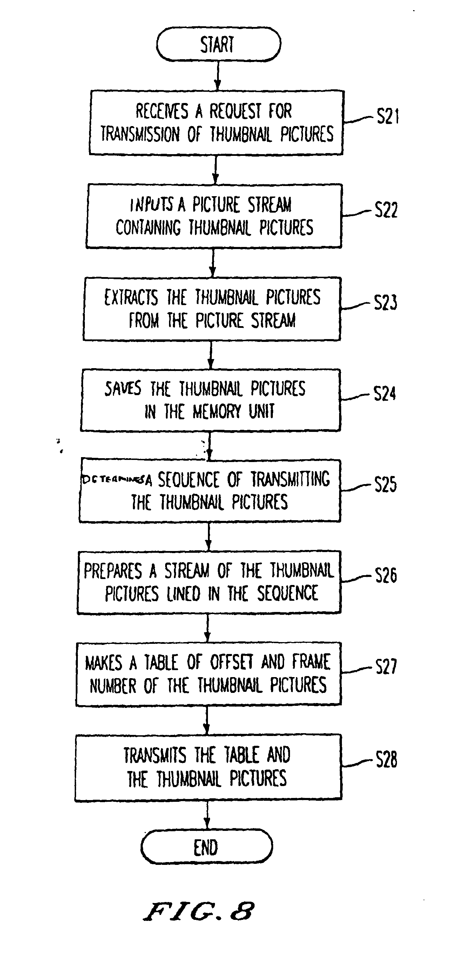

An operation of the picture transmission apparatus 2 will now be described with reference to the flowchart in Fig. 8. In more detail, Fig. 8 illustrates for example an extraction operation performed on the thumbnail pictures from the input picture stream.

As shown in step S21, the transmission request receiving unit 11 first receives a transmission request for thumbnail pictures from a terminal. In this example, assume the transmission request corresponds to the thumbnail pictures in the picture stream shown in Fig. 3. The receiving unit 11 then notifies the thumbnail picture control unit 20 about receiving the transmission request. The control unit 20 next commands the picture stream control unit 25 to input the picture stream including the requested thumbnail pictures.

In response to this command, the picture stream control unit 25 transmits the input request for the picture stream to an external apparatus containing the picture stream including the requested thumbnail pictures. The picture stream input unit 26 then receives the picture stream (step S22).

Further, the picture stream input unit 26 may obtain broadcasted information transmitted in real time from an external apparatus, or may retrieve the picture stream stored in an external memory apparatus such as a server through a network. The thumbnail picture transmission apparatus 2 may also retrieve the picture stream from an internal memory apparatus such as HDD (not shown).

The picture stream retrieved by the picture stream input unit 26 is then transferred to the thumbnail picture extracting unit 27, which extracts thumbnail pictures from the picture stream (step S23). In this example, the thumbnail pictures are extracted from I-Pictures of the picture stream of Fig. 3.

The extracted thumbnail pictures are then transferred to the thumbnail picture memory unit 12, rearranged in the frame number sequence of Fig. 4, and stored in the thumbnail picture memory unit 12 (step S24).

Next, the thumbnail picture control unit 20 requests the sequence-determining unit 14 to determine the transmission sequence for the thumbnail pictures (step S25), which results in the transmitted sequence of Fig. 5.

The control unit 20 next rearranges the thumbnail pictures in the sequence determined by the sequence determining unit 14 and stores the pictures in a region of the thumbnail picture memory unit 12 as a transmission stream (step S26). The thumbnail picture control unit 20 also creates a table between an offset (Byte) showing a leading position of each thumbnail picture of the transmission stream and its frame number (step S27).

After transmitting the table to the transmission unit 13, the control unit 20 transfers the transmission stream stored in the picture memory unit 12 to the thumbnail picture transmission unit 13, Further, the thumbnail picture transmission unit 13 transmits the table and the transmission stream sent from the thumbnail picture memory unit 12 to an external apparatus such as to a terminal requesting the thumbnail picture (step S28).

As described above, after receiving the transmission request for the thumbnail pictures, the picture stream for producing the thumbnail pictures is retrieved, the thumbnail pictures are extracted from the picture stream, and the extracted thumbnail pictures are transmitted in the predetermined sequence. Therefore, a transmission independent of the frame sequence can be efficiently performed.

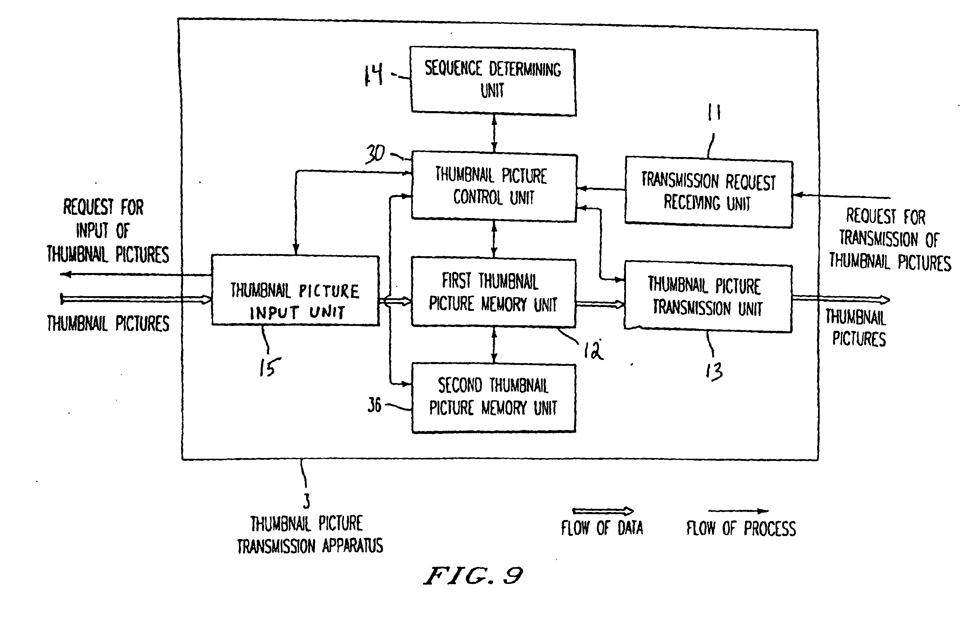

Turning now to Fig. 9, which is a block diagram showing a structure of a thumbnail picture transmission apparatus 3 according to a third embodiment of the present invention.

Note the transmission request receiving unit 11, the thumbnail picture memory unit 12, the thumbnail picture transmission unit 13, the sequence determining unit 14, and the thumbnail picture input unit 15 are the same as those shown in Fig. 1.

As shown, the thumbnail picture transmission apparatus 3 also includes a second thumbnail picture memory unit 36, which stores a plurality of thumbnail pictures. The second thumbnail picture memory unit 36 may include a non-volatile memory device such as HDD, DVD-RAM (Digital Video Disk-Random Access Memory), CD-RW (Compact Disk-Rewritable), and ROM (Read Only Memory), and NRAM (Magnetic Random Access Memory), or a volatile memory such as DRAM, for example.

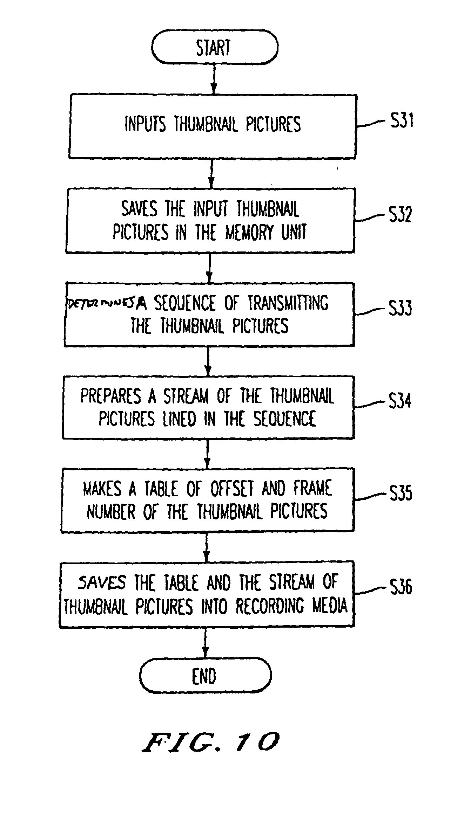

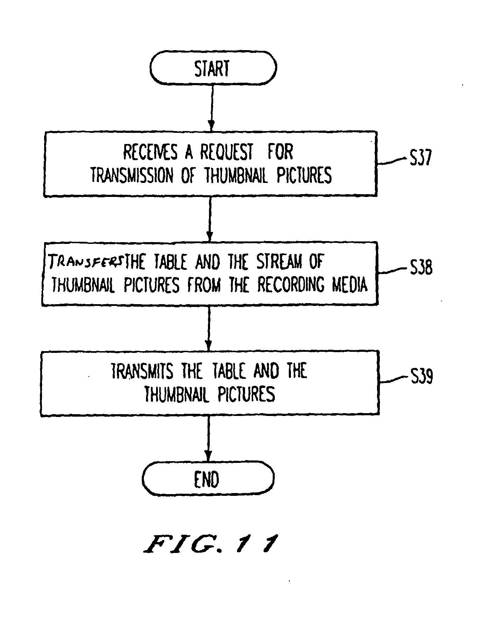

An operation of the thumbnail picture transmission apparatus 3 will now be described with reference to the flowcharts shown in Figs. 10 and 11.

In more detail, Fig. 10 shows an operation of saving an input thumbnail picture stream in a sequence. As shown, the thumbnail picture control unit 30 first requests the thumbnail picture input unit 15 to obtain thumbnail pictures to be stored. The thumbnail picture input unit 15 then obtains the requested thumbnail pictures (step S31). In this example, the thumbnail pictures in Fig. 4 are input. Further, the input thumbnail pictures are temporarily stored in the first thumbnail picture memory unit 12 (step S32).

The control unit 30 then requests the sequence-determining unit 14 to determine the transmission sequence for the input thumbnail pictures. The sequence-determining unit 14 then determines the transmission sequence (step S33). In this example, the determined transmission sequence is same as that shown in Fig. 5.

The picture control unit 30 then rearranges the thumbnail pictures in the sequence determined by the sequence determining unit 14 and stores the pictures in a region of the first thumbnail picture memory unit 12 as a transmission stream (step S34). Further, the thumbnail picture control unit 30 creates a table between an offset showing a leading position of each thumbnail picture of the transmission stream and a frame number (step S35). The thumbnail picture control unit 30 then saves the table and the thumbnail picture stream stored in the first thumbnail picture memory unit 12 into the second thumbnail picture memory unit 36 (step S36).

Turning next to Fig. 11, which is a flow chart showing an operation for the transmission of the stream stored in the second thumbnail picture memory unit 36.

In more detail, the receiving unit 11 receives a transmission request for the thumbnail pictures (step S37). In this example, the requested transmission is for the thumbnail pictures in the picture stream in Fig. 3. The receiving unit 11 then notifies the thumbnail picture control unit 30 about the transmission request.

The thumbnail pictures corresponding to the transmission request are stored in the second thumbnail picture memory unit 36 as a stream obtained by the steps in the flow chart of Fig. 10. The thumbnail picture control unit 30 then transfers the table and the transmission stream stored in the second thumbnail picture memory unit 36 to the thumbnail picture transmission unit 13 (step S38). After transmitting the table sent from the second thumbnail picture memory unit 36, the transmission unit 13 then transmits the stored table transmission stream to an external apparatus requesting the thumbnail pictures (step S39).

As described above, after the thumbnail pictures are input, the thumbnail pictures are stored in the predetermined sequence, and the stored transmission stream is transmitted upon receiving the transmission request for the thumbnail pictures. Therefore, a transmission independent of a frame sequence number can be efficiently performed.

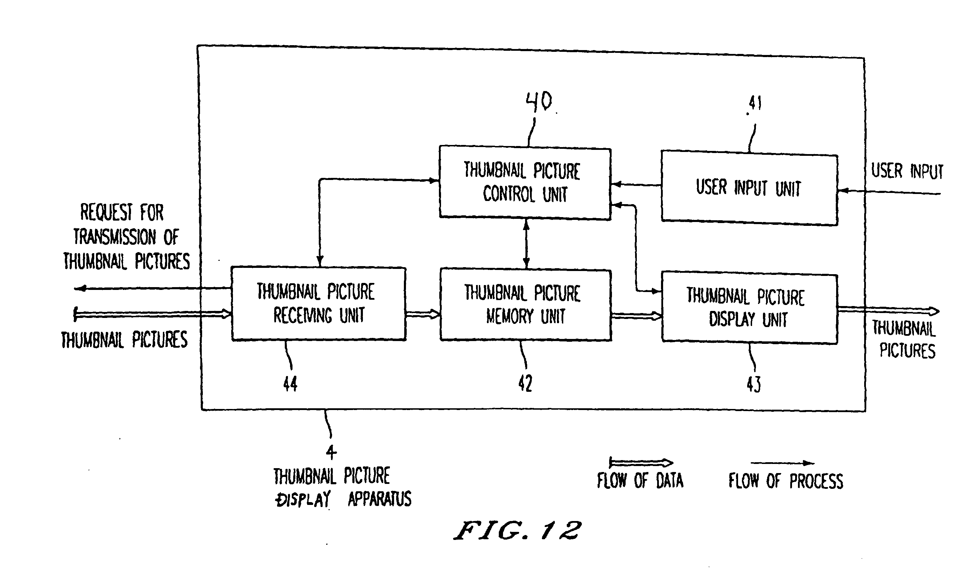

Turning now to Fig. 12, which is a block diagram showing a structure of a thumbnail picture display apparatus 4 according to a fourth embodiment of the present invention.

The display apparatus 4 includes a frame-feed function for frame-feed displaying thumbnail pictures at regular or irregular intervals. The frame-feed display 4 in this example sequentially displays thumbnail pictures at intervals of 0.5 sec. in order from a small to large frame number.

As shown, the thumbnail display apparatus 4 includes a thumbnail picture control unit 40, which requests a thumbnail picture receiving unit 44 to receive thumbnail pictures, controls the thumbnail pictures stored in a thumbnail picture memory unit 42, and requests the thumbnail picture display unit 43 to frame-feed display the thumbnail pictures.

In more detail, a user input unit 41 receives a request for displaying thumbnail pictures from a user. The user input unit 41 then sends the display request to the thumbnail picture control unit 40. Further, the thumbnail picture memory unit 42 (e.g., a memory device such as a DRAM or HDD) stores the received thumbnail pictures. The thumbnail picture display unit 43 may then display the thumbnail pictures stored in the thumbnail picture memory unit 42. In addition, the thumbnail picture receiving unit 44 receives the thumbnail pictures via the Internet or by broadcasting, and the received thumbnail pictures are stored in the thumbnail picture memory unit 42.

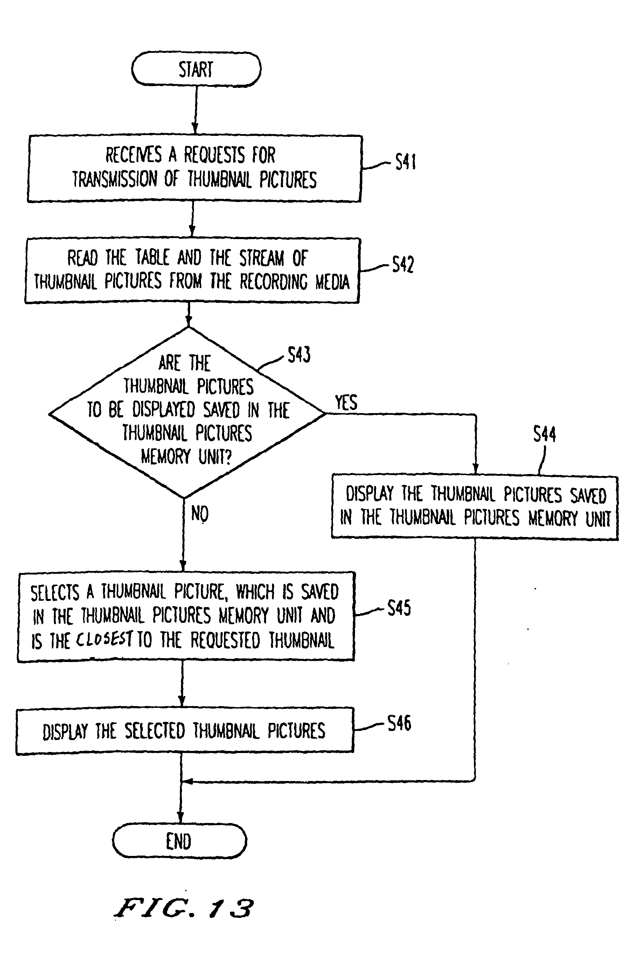

An operation of the thumbnail picture display apparatus 4 will now be described with reference to a flowchart of Fig. 13.

As shown, the user input unit 41 first receives a request for a frame-feed display of thumbnail pictures from a user (step S41). The user input unit 41 then notifies the thumbnail picture control unit 40 about the request, and the control unit 40 begins a frame-feeding display process based on the received table corresponding to thumbnail pictures sequence (step S42).

The control unit 40 also checks whether or not the requested thumbnail pictures to be displayed are stored in the thumbnail picture memory unit 42 (step S43).

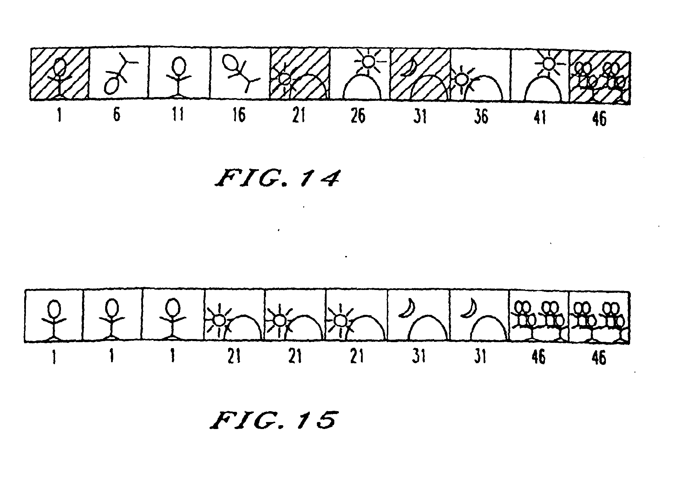

Fig. 14 shows an example of still pictures of the thumbnail pictures for the frame-feed display. Note the reference numerals in Fig. 14 represent frame numbers, and the thumbnail pictures corresponding to frame Nos. 1, 21, 31 and 46 shown by oblique lines are received by the thumbnail picture receiving unit 44 and stored in the thumbnail picture memory unit 42.

The control unit 40 first checks whether or not the still picture corresponding to frame No. 1 is stored in the thumbnail picture memory unit 42. Because in this example the thumbnail picture of frame No. 1 is stored in the memory unit 42, the thumbnail picture is transferred to the display unit 43, which then displays the thumbnail picture of frame No. 1 for 0.5 sec. (Step S44).

After the thumbnail picture of frame No. 1 is transferred to the thumbnail picture display unit 43, the control unit 40 checks whether or not the thumbnail picture of frame No. 6 is stored in the thumbnail picture memory unit 42. However, because in this example the frame No. 6 thumbnail picture is not stored in the memory unit 42, the control unit 40 selects another thumbnail picture closest to frame No. 6 from the thumbnail pictures stored in the memory unit 42 (step S45). In this example, the thumbnail picture of frame No. 1 is closest to frame No. 6. The control unit 40 then transfers the thumbnail picture of No. 1 to the thumbnail picture display unit 43, which displays the frame No. 1 thumbnail picture for 0.5 sec. (step S46).

The thumbnail pictures are then sequentially transferred to the thumbnail picture display unit 43 in a similar fashion as described above, and the display unit 43 displays each of these thumbnail pictures respectively for 0.5 sec.

For example, Fig. 15 is a diagram showing a row of thumbnail pictures displayed at intervals of 0.5 sec. by the display unit 43. The thumbnail picture in frame No. 1 is displayed for 1.5 sec., the thumbnail picture in frame No. 21 is displayed for 1.5 sec., the thumbnail picture in frame No. 31 is displayed for 1.0 sec., and the thumbnail picture in frame No. 46 is displayed for 1.0 sec.

As described above, in place of the non-stored thumbnail pictures, a stored thumbnail picture in a frame number closest to the non-stored still picture is selected from the stored thumbnail pictures and is displayed, whereby the frame-feed display can be performed using the stored thumbnail pictures.

Further, using the different thumbnail picture transmission apparatus described above, the frame-feed display can be efficiently performed. Also, even with a method in which the important still pictures corresponding to the scene change points are transmitted first, the sufficient effect can be obtained.

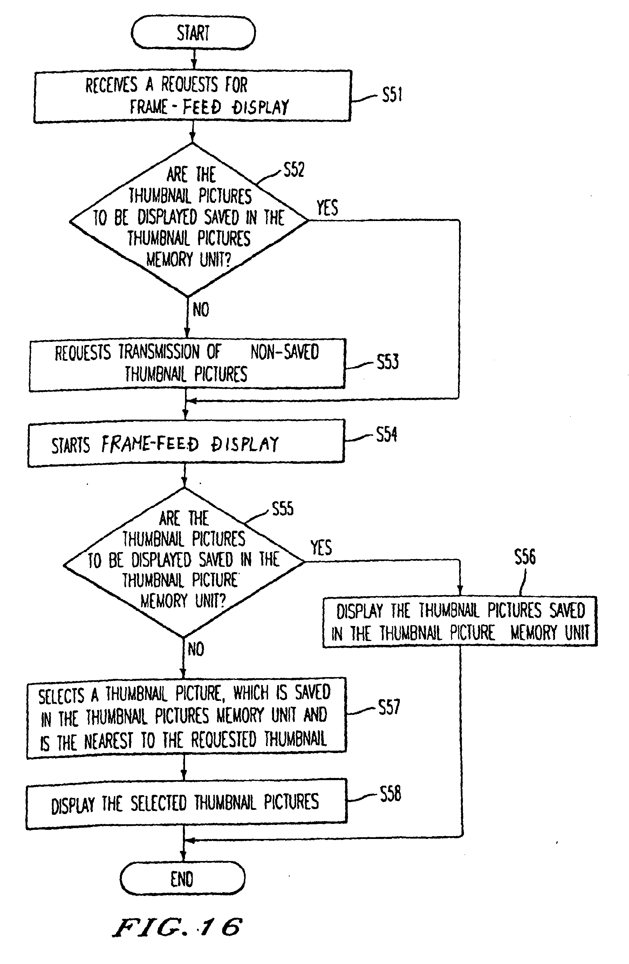

Another operation of the thumbnail picture display apparatus 4 will now be described with reference to the flowchart shown in Fig. 16.

As shown, the user input unit 41 first receives a request for frame-feed display of thumbnail pictures from a user (step S51).

The user input unit 41 then notifies the thumbnail picture control unit 40, which checks whether or not the requested thumbnail pictures are stored in the thumbnail picture memory unit 42 (step S52).

In this example, the thumbnail pictures in frame Nos. 1, 21, 31 and 46 shown by oblique lines of Fig. 14 are stored in the thumbnail picture memory unit 42. The control unit 40 then requests the receiving unit 44 to request the thumbnail pictures corresponding to frame Nos. 6, 11, 16, 26, 36, and 41, which have not been stored in the memory 42. The receiving unit 44 next sends this transmission request to any one of the transmission apparatus described int the above embodiments (step S53).

The thumbnail pictures received in accordance with the transmission request are then stored in the thumbnail picture memory unit 42 and the frame-feed display of the pictures is started (step S54). That is, as shown in step S55, the control unit 40 checks whether or not a thumbnail picture in frame No. 1 is stored in the memory unit 42.

Because the thumbnail picture in frame No. 1 is stored in the thumbnail picture memory unit 42, the stored thumbnail picture is transferred to the thumbnail picture display unit 43, which displays it for 0.5 sec. (step S56).

Next, the control unit 40 checks whether or not a thumbnail picture corresponding to frame No. 6 is stored in the thumbnail picture memory unit 42. While the thumbnail picture corresponding to frame No. 1 is displayed for 0.5 sec., in case the thumbnail picture in frame No. 6 is received by the receiving unit 44 and is stored in the memory unit 42, the thumbnail picture in frame No. 6 is sent to the picture display unit 43. The display unit 43 then displays the thumbnail picture for 0.5 sec. However, if the picture in frame No. 6 is not received by the receiving unit 44, the control unit 40 selects a thumbnail picture in a frame closest to the frame No. 6 from the thumbnail pictures stored in the thumbnail picture memory unit 42 (step S57).

In this example, the thumbnail picture of frame No. 1 is closest to that of frame No. 6 among the pictures stored in the memory unit 42. Next, the control unit 40 sends the thumbnail picture in frame No. 1 to the picture display unit 43, which displays the thumbnail picture for 0.5 sec. (step S58).

The thumbnail pictures are then sequentially transferred to the thumbnail picture display unit 43 in a similar fashion as described above, and the display unit 43 displays each of these thumbnail pictures respectively for 0.5 sec.

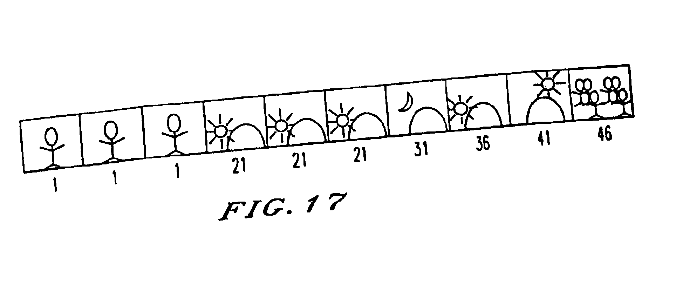

For example, Fig. 17 is a diagram showing a row of pictures displayed in the thumbnail picture display unit 43 at intervals of 0.5 sec. As shown in Fig. 17, because pictures in frame Nos. 6, 11, 16 and 26 have not been received by the receiving unit 44 and are not stored in the memory unit 42 at the frame-feed displaying time, the pictures in frame Nos. 1 and 21 are respectively displayed.

Further, because pictures in frame Nos. 36 and 41 have been already received by the receiving unit 44 and are stored in the memory unit 42 at the frame-feed displaying time, the stored pictures in frame Nos. 36 and 41 are displayed in the display unit 43.

As described above, if requested pictures have not been received by the time of the frame-feed display, other thumbnail pictures in the frame numbers closest to the non-stored still pictures are selected and displayed. Therefore, the frame-feed display of thumbnail pictures can be performed using the stored pictures.

Further, the thumbnail pictures display apparatus can be used in combination with the thumbnail picture transmission apparatus in any of one of the first to third embodiments discussed above. The components of the different thumbnail picture transmission apparatuses may also be suitably combined and used.

In addition, the functions of the thumbnail picture transmission apparatus and display can be performed by a computer program, and the functions described in the embodiments can be performed by using program products for thumbnail pictures transmission or program products for thumbnail pictures display, which causes the computer to execute these functions.

Further, by recording the program products for thumbnail picture transmission and display in a computer-readable recording medium, the same effects as those of the above embodiments can be readily obtained by inputting the computer program in a computer through the recording medium.

That is, this invention may be conveniently implemented using a conventional general purpose digital computer or microprocessor programmed according to the teachings of the present specification, as will be apparent to those skilled in the computer art. Appropriate software coding can readily be prepared by skilled programmers based on the teachings of the present disclosure, as will be apparent to those skilled in the software art. The invention may also be implemented by the preparation of application specific integrated circuits or by interconnecting an appropriate network of conventional component circuits, as will be readily apparent to those skilled in the art.

The present invention also includes a computer program product which is a storage medium including instructions which can be used to program a computer to perform a process of the invention. The storage medium can include, but is not limited to, an type of disk including floppy disks, optical disks, CD-ROMs, and magneto-optical disks, ROMs, RAMs, EPROMs, EEPROMs, magnetic or optical cards, or any type of pure software inventions (e.g., word processing, accounting, Internet related, etc.) media suitable for storing electronic instructions.

In addition, the above-described embodiments refer to compressed still pictures (i.e., thumbnail pictures). However, the pictures used in the frame-feed display do not always have to be compressed (i.e., non-compressed pictures may be substituted for the thumbnail pictures in the above embodiments).

Obviously, numerous modifications and variations of the present invention are possible in light of the above teachings. It is therefore to be understood that within the scope of the appended claims, the invention may be practiced otherwise than as specifically described herein.

## Claims

1. An apparatus for transmitting a plurality of still pictures extracted from a picture stream, comprising:
transmission request receiving means (11) for receiving a transmission request for the plurality of still pictures;
transmission sequence determining means (14) for determining a transmission sequence for the plurality of still pictures which is different than the sequence of the still pictures in the picture stream;
transmission means (13) for transmitting the still pictures according to the transmission sequence determined by the determining means; and
still picture control means (10, 20, 30, 40) coupled to the receiving means (11), the determining means (14), and the transmission means (13), and for controlling an operation of the apparatus, wherein the plurality of still pictures comprise scene-changing still pictures and non-scene-changing still pictures, and
wherein the determining means (14) determines the transmission sequence such that the scene-changing still pictures are transmitted prior to the non-scene-changing still pictures.

2. An apparatus according to claim 1, wherein the determining means (14) determines the transmission sequence such that one of the non-scene-changing still pictures positioned in a middle of a largest interval between scene-changing still pictures included in the picture stream is first transmitted after the scene-changing still pictures are transmitted.

3. An apparatus according to any preceding claim, further comprising:
memory means (12) coupled to the control means (10, 20, 30, 40) and the transmission means (13), and for storing the still pictures as a transmission stream in the sequence determined by the determining means (14).

4. An apparatus according to any of claims 1 or 2, further comprising:
first memory means (12) coupled to the still picture control means (10, 20, 30, 40) and the input means (15), and for storing the input plurality of still pictures; and
second memory means (36) coupled to control means (10, 20, 30, 40), and for storing the plurality of still pictures as a transmission stream in the sequence determined by the determining means (14).

5. An apparatus according to any preceding claim, further comprising;
still picture input means coupled to the still picture control means (10, 20, 30, 40), and for inputting the picture stream; and
thumbnail picture extracting means (27) coupled to the still picture control means (10, 20, 30, 40) and the still picture input means, and for extracting the plurality of the still pictures from the picture stream input (26) to the still picture input means.

6. An apparatus according to claim 5, further comprising:
picture stream control means (25) coupled to the still picture input means and the still picture control means (10, 20, 30, 40), and for transmitting the transmission request received by the receiving means (11) to an external apparatus, and for controlling the still picture input means so as to input the picture stream.

7. An apparatus according to any preceding claim, wherein the control means (10, 20, 30, 40) creates a table including an offset value of a leading position of each still picture and its corresponding frame number in the picture stream, and
wherein the transmission means (13) transmits the table prior to transmitting the sequenced still pictures.

8. A method for transmitting a plurality of still pictures extracted from a picture stream, comprising:
receiving a transmission request (S11) for the plurality of still pictures;
determining a transmission sequence (S14) for the plurality of still pictures which is different than the sequence of the still pictures in the picture stream; and
transmitting the still pictures (S17) according to the transmission sequence determined in the determining step wherein the plurality of still pictures comprise scene-changing still pictures and non-scene-changing still pictures, and
wherein the determining step (S14) determines the transmission sequence be such that the scene-changing still pictures are transmitted prior to the non-scene-changing still pictures.

9. A method according to claim 8, wherein the determining step (S 14) determines the transmission sequence be such that one of the non-scene-changing still pictures positioned in a middle of a largest interval between scene-changing still pictures included in the picture stream is first transmitted after the scene-changing still pictures are transmitted.

10. A method according to any of claims 8 or 9, further comprising:
storing the still pictures as a transmission stream (S 15) in the sequence determined by the determining means.

11. A method according to any of claims 8 to 10, further comprising;
inputting the picture stream; and
extracting the plurality of the still pictures from the picture stream input to the still picture input means.

12. A method according to claim 11, further comprising:
transmitting the transmission request received in the receiving step to an external apparatus; and
inputting the picture stream.

13. A method according to any of claims 8 to 12, further comprising:
storing the input plurality of still pictures in a first memory unit (12); and
storing the plurality of still pictures as a transmission stream in the sequence determined by the determining step in a second memory unit (36).

14. The method according to any of claims 8 to 13, further comprising:
creating a table (S16) including an offset value of a leading position of each still picture and its corresponding frame number in the picture stream, and
wherein the transmission step (S12) transmits the table prior to transmitting the sequenced still pictures.

15. A computer program product for transmitting a plurality of still pictures extracted from a picture stream, comprising:
a first computer code configured to receive a transmission request (S 11) for the plurality of still pictures;
a second computer code configured to determine a transmission sequence (S14) for the plurality of still pictures which is different than the sequence of the still pictures in the picture stream; and
a third computer code configured to transmit the still pictures (S 17) according to the transmission sequence determined by the second computer code, wherein the plurality of still pictures comprise scene-changing still pictures and non-scene-changing still pictures, and
wherein the second computer code determines the transmission sequence (S14) be such that the scene-changing still pictures are transmitted prior to the non-scene-changing still pictures.

16. A computer program product according to claim 15, wherein the second computer code determines the transmission sequence (S14) be such that one of the non-scene-changing still pictures positioned in a middle of a largest interval between scene-changing still pictures included in the picture stream is first transmitted after the scene-changing still pictures are transmitted.

17. A computer program product according to any of claims 15 or 16, further comprising:
a fourth computer code configured to store the still pictures as a transmission stream (S36) in the sequence determined by the second computer code.

18. A computer program product according to any of claims 15 to 17, further comprising;
a fourth computer code configured to input the picture stream; and
a fifth computer code configured to extract the plurality of the still pictures from the picture stream input to the fourth computer code.

19. A computer program product according to claim 18, further comprising:
a sixth computer code configured to transmit the transmission request received in the receiving step (36) to an external apparatus; and
a seventh computer code configured to input the picture stream.

20. A computer program product according to any of claims 15 to 19, further comprising:
a fourth computer code configured to store the input plurality of still pictures in a first memory unit; and
a fifth computer code configured to store the plurality of still pictures as a transmission stream in the sequence determined by the determining step in a second memory unit.

21. A computer program product according to any of claims 15 to 20, further comprising:
a fourth computer code configured to create a table including an offset value of a leading position of each still picture and its corresponding frame number in the picture stream, and
wherein the third computer code transmits the table prior to transmitting the sequenced still pictures.

22. A computer program product according to any of claims 15 to 21, provided on a carrier medium.

## Patentansprüche

1. Vorrichtung zum Übertragen einer Vielzahl von Standbildern, die aus einem Bildstrom extrahiert wurden, umfassend:
Übertragungsanforderungs-Empfangsmittel (11) zum Empfangen einer Übertragungsanforderung für die Vielzahl von Standbildern;
Übertragungsreihenfolge-Bestimmungsmittel (14) zum Bestimmen einer Übertragungsreihenfolge für die Vielzahl von Standbildern, die von der Reihenfolge der Standbilder in dem Bildstrom verschieden ist;
Übertragungsmittel (13) zum Übertragen der Standbilder gemäß der von dem Bestimmungsmittel bestimmten Übertragungsreihenfloge; und
Standbild-Steuermittel (10, 20, 30, 40), gekoppelt an das Empfangsmittel (11), das Bestimmungsmittel (14) und das Übertragungsmittel (13) und zum Steuern einer Operation der Vorrichtung, wobei die Vielzahl von Standbildern szenenwechselnde Standbilder und nicht szenenwechselnde Standbilder umfasse, und
wobei das Bestimmungsmittel (14) die Übertragungsreihenfolge derart bestimmt, dass die szenenwechselnden Standbilder vor den nicht szenenwechseluden Standbildern übertragen werden.

2. Vorrichtung nach Anspruch 1, wobei das Bestimmungsmittel (14) die Übertragungsreihenfolge derart bestimmt, dass eines der nicht szenenwechselnden Standbilder, das in einer Mitte eines größten Intervalls zwischen szenenwechselnden Standbildern, die in dem Bildstrom enthalten sind, angeordnet ist, zuerst übertragen wird, nachdem die szenenwechselnden Standbilder übertragen wurden.

3. Vorrichtung nach einem der vorstehenden Ansprüche, weiter umfassend:
Speichermittel (12), gekoppelt an das Steuermittel (10, 20, 30, 40) und das Übertragungsmittel (13) und zum Speichern der Standbilder als ein Übertragungsstrom in der von dem Bestimmungsmittel (14) bestimmten Reihenfolge.

4. Vorrichtung nach einem der Ansprüche 1 oder 2, weiter umfassend:
erste Speichermittel (12), gekoppelt an das Standbild-Steuermittel (10, 20, 30, 40) und das Eingabemittel (15) und zum Speichern der eingegebenen Vielzahl von Standbildern; und
zweite Speichermittel (36), gekoppelt an Steuermittel (10, 20, 30, 40) und zum Speichern der Vielzahl von Standbildern als ein Übertragungsstrom in der von dem Bestimmungsmittel (14) bestimmten Reihenfolge.

5. Vorrichtung nach einem der vorstehenden Ansprüche, weiter umfassend:
Standbild-Eingabemittel, gekoppelt an das Standbild-Steuermittel (10, 20, 30, 40) und zum Eingeben des Bildstroms; und
Miniaturansicht-Extraktionsmittel (27), gekoppelt an das Standbild-Steuermittel (10, 20, 30, 40) und das Standbild-Eingabemittel und zum Extrahieren der Vielzahl der Standbilder aus der Bildstromeingabe (26) zu dem Standbild-Eingabemittel.

6. Vorrichtung nach Anspruch 5, weiter umfassend:
Bildstrom-Steuermittel (25), gekoppelt an das Standbild-Eingabemittel und das Standbild-Steuermittel (10, 20, 30, 40) und zum Übertragen der soeben von dem Empfangsmittel (11) empfangenen Übertragungsanforderung an eine externe Vorrichtung und zum Steuern des Standbild-Eingabemittels, um den Bildstrom einzugeben.

7. Vorrichtung nach einem der vorstehenden Ansprüche, wobei das Steuermittel (10, 20, 30, 40) eine Tabelle erzeugt, die einen Versatzwert einer vorderen Position von jedem Standbild und seine korrespondierende Rahmennummer in dem Bildstrom enthält, und
wobei das Übertragungsmittel (13) die Tabelle vor dem Übertragen der in Reihenfolge angeordneten Standbilder überträgt.

8. Verfahren zum Übertragen einer Vielzahl von Standbildern, die aus einem Bildstrom extrahiert wurden, umfassend:
Empfangen einer Übertragungsanforderung (S11) für die Vielzahl von Standbildern;
Bestimmen einer Übertragungsreihenfolge (S14) für die Vielzahl von Standbildern, die von der Reihenfolge der Standbilder in dem Bildstrom verschieden ist; und
Übertragen der Standbilder (S17) gemäß der in dem Bestimmungsschritt bestimmten Übertragungsreihenfolge, wobei die Vielzahl von Standbildern szenenwechselnde Standbilder und nicht szenenwechselnde Standbilder umfasst, und
wobei der Bestimmungsschritt (S14) die Übertragungsreihenfolge derart bestimmt, dass die szenenwechselnden Standbilder vor den nicht szenenwechselnden Standbildern übertragen werden.

9. Verfahren nach Anspruch 8, wobei der Bestimmungsschritt (S14) die Übertragungsreihenfolge derart bestimmt, dass eines der nicht szenenwechselnden Standbilder, das in einer Mitte eines größten Intervalls zwischen szenenwechselnden Standbildern, die in dem Bildstrom enthalten sind, angeordnet ist, zuerst übertragen wird, nachdem die szenenwechselnden Standbilder übertragen wurden.

10. Verfahren nach einem der Ansprüche 8 oder 9, weiter umfassend:
Speichern der Standbilder als ein Übertragungsstrom (S15) in der von dem Bestimmungsmittel bestimmten Reihenfolge.

11. Verfahren nach einem der Ansprüche 8 bis 10, weiter umfassend:
Eingeben des Bildstroms; und
Extrahieren der Vielzahl der Standbilder aus der Bildstromeingabe zu dem Standbild-Eingabemittel.

12. Verfahren nach Anspruch 11, weiter umfassend:
Übertragen der Übertragungsanforderung, die in dem Empfangsschritt empfangen wurde, an eine externe Vorrichtung; und
Eingeben des Bildstroms.

13. Verfahren nach einem der Ansprüche 8 bis 12, weiter umfassend:
Speichern der eingegebenen Vielzahl von Standbildern in der ersten Speichereinheit (12); und
Speichern der Vielzahl von Standbildern als ein Übertragungsstrom in der Reihenfolge, die von dem Bestimmungsschritt bestimmt wurde, in einer zweiten Speichereinheit (36).

14. Verfahren nach einem der Ansprüche 8 bis 13, weiter umfassend:
Erzeugen einer Tabelle (S16), die einen Versatzwert einer vorderen Position von jedem Standbild und seine korrespondierende Rahmennummer in dem Bildstrom enthält, und
wobei der Übertragungsschritt (S12) die Tabelle vor dem Übertragen der in Reihenfolge angeordneten Standbilder überträgt.

15. Computerprogrammprodukt zum Übertragen einer Vielzahl von Standbildern, die aus einem Bildstrom extrahiert wurden, umfassend:
einen ersten Computercode, konfiguriert zum Empfangen einer Übertragungsanforderung (S11) für die Vielzahl von Standbildern;
einen zweiten Computercode, konfiguriert zum Bestimmen einer Übertragungsreihenfolge (S14) für die Vielzahl von Standbildern, die von der Reihenfolge der Standbilder in dem Bildstrom verschieden ist; und
einen dritten Computercode, konfiguriert zum Übertragen der Standbilder (S17) gemäß der von dem zweiten Computercode bestimmten Übertragungsreihenfolge, wobei die Vielzahl von Standbildern szenenwechselnde Standbilder und nicht szenenwechselnde Standbilder umfasst, und
wobei der zweite Computercode die Übertragungsreihenfolge derart bestimmt (S14), dass die szenenwechselnden Standbilder vor den nicht szenenwechselnden Standbildern übertragen werden.

16. Computerprogrammprodukt nach Anspruch 15, wobei der zweite Computercode die Übertragungsreihenfolge derart bestimmt (S14), dass eines der nicht szenenwechselnden Standbilder, das in einer Mitte eines größten Intervalls zwischen szenenwechselnden Standbildern, die in dem Bildstrom enthalten sind, angeordnet ist, zuerst übertragen wird, nachdem die szenenwechselnden Standbilder übertragen wurden.

17. Computerprogrammprodukt nach einem der Ansprüche 15 oder 16, weiter umfassend:
einen vierten Computercode, konfiguriert zum Speichern der Standbilder als ein Übertragungsstrom (S36) in der durch den zweiten Computercode bestimmten Reihenfolge.

18. Computerprogrammprodukt nach einem der Ansprüche 15 bis 17, weiter umfassend:
einen vierten Computercode, konfiguriert zum Eingeben der Standbilder; und
einen fünften Computercode, konfiguriert zum Extrahieren der Vielzahl der Standbilder aus dem Bildstrom, der in den vierten Computercode eingegeben wurde.

19. Computerprogrammprodukt nach Anspruch 18, weiter umfassend:
einen sechsten Computercode, konfiguriert zum Übertragen der Übertragungsanforderung, die in dem Empfangsschritt (36) empfangen wurde, an eine externe Vorrichtung; und
einen siebten Computercode, konfiguriert zum Eingeben des Bildstroms.

20. Computerprogrammprodukt nach einem der Ansprüche 15 bis 19, weiter umfassend;
einen vierten Computercode, konfiguriert zum Speichern der eingegebenen Vielzahl von Standbildern in einer ersten Speichereinheit; und
einen fünften Computercode, konfiguriert zum Speichern der Vielzahl von Standbildern als ein Übertragungsstrom in der Reihenfolge, die durch den Bestimmungsschritt bestimmt wurde, in einer zweiten Speicliereinheit.

21. Computerprogrammprodukt nach einem der Ansprüche 15 bis 20, weiter umfassend:
einen vierten Computercode, konfiguriert zum Erzeugen einer Tabelle, die einen Versatzwert einer vorderen Position von jedem Standbild und seine korrespondierende Rahmennummer in dem Bildstrom enthält, und
wobei der dritte Computercode die Tabelle vor dem Übertragen der in Reihenfolge angeordneten Standbilder überträgt.

22. Computerprogrammprodukt nach einem der Ansprüche 15 bis 21, bereitgestellt auf einem Trägermedium.

## Revendications

1. Dispositif pour transmettre une pluralité d'images fixes extraite à partir d'un flux d'images, comportant:
un moyen de réception de demandes de transmission (11) pour recevoir une demande de transmission pour la pluralité d'images fixes;
un moyen de détermination de séquence de transmission (14) pour déterminer une séquence de transmission de la pluralité d'images fixes, laquelle séquence est différente de la séquence des images fixes dans le flux d'images;
un moyen de transmission (13) pour transmettre les images fixes selon la séquence de transmission déterminée par le moyen de détermination; et
un moyen de commande d'images fixes (10, 20, 30, 40) couplé au moyen de réception (11), au moyen de détermination (14), et au moyen de transmission (13), et pour commander une opération du dispositif, dans lequel la pluralité d'images fixes comporte des images fixes avec changement de scène et des images fixes sans changement de scène, et
dans lequel le moyen de détermination (14) détermine la séquence de transmission de sorte que les images fixes avec changement de scène sont transmises avant les images fixes sans changement de scène.

2. Dispositif selon la revendication 1, dans lequel le moyen de détermination (14) détermine la séquence de transmission de sorte que l'une des images fixes sans changement de scène, placée au milieu d'un plus grand intervalle entre des images fixes avec changement de scène incluses dans le flux d'images, est transmise en priorité après que les images fixes avec changement de scène ont été transmises.

3. Dispositif selon l'une quelconque des revendications précédentes, comportant en outre:
un moyen de mémoire (12) couplé au moyen de commande (10, 20, 30, 40) et au moyen de transmission (13), et pour stocker les images fixes en tant qu'un flux de transmission dans la séquence déterminée par le moyen de détermination (14).

4. Dispositif selon l'une quelconque des revendications 1 ou 2, comportant en outre:
un premier moyen de mémoire (12) couplé au moyen de commande d'images fixes (10, 20, 30, 40) et au moyen d'entrée (15), et pour stocker la pluralité entrée d'images fixes; et
un second moyen de mémoire (36) couplé au moyen de commande (10, 20, 30, 40), et pour stocker la pluralité d'images fixes en tant qu'un flux de transmission dans la séquence déterminée par le moyen de détermination (14).

5. Dispositif selon l'une quelconque des revendications précédentes, comportant en outre:
un moyen d'entrée d'images fixes couplé au moyen de commande d'images fixes (10, 20, 30, 40), et pour entrer le flux d'images; et
un moyen d'extraction de vignettes (27) couplé au moyen de commande d'images fixes (10, 20, 30, 40) et au moyen d'entrée d'images fixes, et pour extraire la pluralité d'images fixes à partir du flux d'images (26) entré dans le moyen d'entrée d'images fixes.

6. Dispositif selon la revendication 5, comportant en outre:
un moyen de commande de flux d'images (25) couplé au moyen d'entrée d'images fixes et au moyen de commande d'images fixes (10, 20, 30, 40), et pour transmettre la demande de transmission reçue par le moyen de réception (11) à un dispositif externe, et pour commander le moyen d'entrée d'images fixes de manière à entrer le flux d'images.

7. Dispositif selon l'une quelconque des revendications précédentes, dans lequel le moyen de commande (10, 20, 30, 40) crée une table comportant une valeur de décalage d'une position de tête de chaque image fixe et son numéro de trame correspondant dans le flux d'images, et
dans lequel, le moyen de transmission (13) transmet la table avant de transmettre les images fixes en séquence.

8. Procédé pour transmettre une pluralité d'images fixes extraite à partir d'un flux d'images, comportant les étapes consistant à:
recevoir une demande de transmission (S11) pour la pluralité d'images fixes;
déterminer une séquence de transmission (S14) pour la pluralité d'images fixes, laquelle séquence est différente de la séquence des images fixes dans le flux d'images; et
transmettre les images fixes (S17) selon la séquence de transmission déterminée dans l'étape de détermination où la pluralité d'images fixes comporte des images fixes avec changement de scène et des images fixes sans changement de scène, et
dans lequel l'étape de détermination (S14) détermine que la séquence de transmission est telle que les images fixes avec changement de scène sont transmises avant les images fixes sans changement de scène.

9. Procédé selon la revendication 8, dans lequel l'étape de détermination (S14) détermine que la séquence de transmission est telle que l'une des images fixes sans changement de scène, placée au milieu d'un plus grand intervalle entre des images fixes avec changement de scène incluses dans le flux d'images, est transmise en priorité après que les images fixes avec changement de scène out été transmises.

10. Procédé selon l'une quelconque des revendications 8 ou 9, comportant en outre l'étape consistant à:
stocker les images fixes en tant qu'un flux de transmission (S15) dans la séquence déterminée par le moyen de détermination.

11. Procédé selon l'une quelconque des revendications 8 à 10, comportant en outre les étapes consistant à:
entrer le flux d'images; et
extraire la pluralité d'images fixes à partir du flux d'images entré dans le moyen d'entrée d'images fixes.

12. Procédé selon la revendication 11, comportant en outre les étapes consistant à:
transmettre la demande de transmission reçue à l'étape de réception à un dispositif externe; et
entrer le flux d'images.

13. Procédé selon l'une quelconque des revendications 8 à 12, comportant en outre les étapes consistant à:
stocker la pluralité d'images fixes entrée dans une première unité de mémoire (12); et
stocker la pluralité d'images fixes en tant que flux de transmission dans la séquence déterminée par l'étape de détermination dans une seconde unité de mémoire (36).

14. Procédé selon l'une quelconque des revendications 8 à 13, comportant en outre les étapes consistant à:
créer une table (S16) comportant une valeur de décalage d'une position de tête de chaque image fixe et son numéro de trame dans le flux d'images, et
dans lequel l'étape de transmission (S12) transmet la table avant de transmettre les images fixes en séquence.

15. Produit-programme informatique pour transmettre une pluralité d'images fixes extraite à partir d'un flux d'images, comportant:
un premier code informatique configuré pour recevoir une demande de transmission (S11) pour la pluralité d'images fixes;
un deuxième code informatique configuré pour déterminer une séquence de transmission (S14) pour la pluralité d'images fixes, laquelle séquence est différente de la séquence des images fixes dans le flux d'images; et
un troisième code informatique configuré pour transmettre les images fixes (S17) selon la séquence de transmission déterminée par le deuxième code informatique, dans lequel la pluralité d'images fixes comporte des images fixes avec changement de scène et des images fixes sans changement de scène, et
dans lequel, le deuxième code informatique détermine que la séquence de transmission (S14) est telle que les images fixes avec changement de scène sont transmises avant les images fixes sans changement de scène.

16. Produit-programme informatique selon la revendication 15, dans lequel le deuxième code informatique détermine que la séquence de transmission (S14) est telle que l'une des images fixes sans changement de scène, placée au milieu d'un plus grand intervalle entre des images fixes avec changement de scène incluses dans le flux d'images, est transmise en priorité après que les images fixes avec changement de scène ont été transmises.

17. Produit-programme informatique selon l'une quelconque des revendications 15 ou 16, comportant en outre:
un quatrième code informatique configuré pour stocker les images fixes en tant qu'un flux de transmission (S36) dans la séquence déterminée par le deuxième code informatique.

18. Produit-programme informatique selon l'une quelconque des revendications 15 à 17, comportant en outre:
un quatrième code informatique configuré pour entrer le flux d'images; et
un cinquième code informatique configuré pour extraire la pluralité d'images fixes à partir du flux d'images entré dans le quatrième code informatique.

19. Produit-programme informatique selon la revendication 18, comportant en outre:
un sixième code informatique configuré pour transmettre la demande de transmission reçue à l'étape de réception (36) à un dispositif externe, et
un septième code informatique configuré pour entrer le flux d'entrée.

20. Produit-programme informatique selon l'une quelconque des revendications 15 à 19, comportant en outre:
un quatrième code informatique configuré pour stocker la pluralité d'images fixes entrée dans une première unité de mémoire; et
un cinquième code informatique configuré pour stocker la pluralité d'images fixes en tant qu'un flux de transmission dans la séquence déterminée par l'étape de détermination dans une seconde unité de mémoire.

21. Produit-programme informatique selon l'une quelconque des revendications 15 à 20, comportant en outre;
un quatrième code informatique configuré pour créer une table comportant une valeur de décalage d'une position de tête de chaque image fixe et son numéro de trame correspondant dans le flux d'images, et
dans lequel le troisième code informatique transmet la table avant de transmettre les images fixes en séquence.

22. Produit-programme informatique selon l'une quelconque des revendication 15 à 21, délivré sur un support porteur.
